# EUROPEAN PATENT APPLICATION

(11) **EP 2 474 973 A1**
(43) Date of publication of application: **11.07.2012**
(21) Application number: 12150109.2
(22) Date of filing: 03.01.2012
(51) Int. Cl.: G10L 15/00, H04N 21/422

(54) **Display apparatus and voice control method thereof**

(30) Priority: 06.01.2011 KR 20110001520
(71) Applicant: Samsung Electronics Co., Ltd., Suwon-si, Gyeonggi-do 442-742 (KR)
(72) Inventor: Ryu, Hee-seob, Gyeonggi-do (KR); Park, Seung-kwon, Gyeonggi-do (KR); Jang, Jong-hyuk, Gyeonggi-do (KR); Choi, Chan-hee, Seoul (KR)
(74) Representative: Brandon, Paul Laurence

(57) **Abstract**

A voice-controllable display apparatus is provided. The display apparatus includes a display unit which displays a plurality of icons on a screen, a control unit which controls the display unit to display identifiers corresponding the plurality of icons, the identifiers being assigned to the plurality of icons based on a preset standard if a voice recognition starts, and the identifiers being different from each other, and a voice input unit which receives a voice input. The control unit, selects an icon corresponding to the received voice input assigned to the identifier, if a voice input for an arbitrary identifier is received through the voice input unit. Thereby, effective voice control of the apparatus is achieved.

## Description

### CROSS-REFERENCE TO RELATED APPLICATION

This application claims priority from Korean Patent Application No. 10-2011-0001520, filed on January 06, 2011, in the Korean Intellectual Property Office, the disclosure of which is incorporated herein by reference in its entirety.

### BACKGROUND

### 1. Field

Apparatuses and methods consistent with exemplary embodiments relate to a display apparatus and a voice control method thereof, and more particularly, to a display apparatus and a voice control method thereof capable of controlling a voice through a voice input.

### 2. Description of the Related Art

Recently, with the development of electronic technology, various kinds of electronic appliances have been developed and widespread. In addition, various technologies have been gradually adapted to electronic devices such as televisions (TVs) and mobile phones to allow users to use the device more conveniently and to provide the user with a variety of services.

Voice recognition technology is one of the various technologies. The voice recognition technology is a technology in which even when there is no manipulation of an appliance by operating a remote controller or keys of a main body of the appliance, functions for specific commands are performed when the specific commands are pronounced.

Such a voice recognition technology has been already used in various kinds of technology groups such as navigation devices (e.g., GPS) or mobile phones.

The appliances to which the voice recognition technology is adapted can recognize only specific voice commands. Thus, when there are many specific voice commands, it is difficult for a user to remember all the specific voice commands. In addition, when a length of a specific voice command is long and pronunciation of the specific voice command is difficult, the voice recognition technology disposed in the device has difficulty understanding the specific voice command and a user has to repeatedly pronounce the same specific voice command.

Particularly, there are many cases where a user downloads and installs applications for products introduced in recent years. Since it is difficult for the user to know the specific voice commands for such new installed applications, use of the voice recognition technology is deteriorated and not reliable.

### SUMMARY

One or more exemplary embodiments may overcome the above disadvantages and/or other disadvantages not described above. However, it is understood that one or more exemplary embodiment are not required to overcome the disadvantages described above, and may not overcome any of the problems described above.

One or more exemplary embodiments provide a display apparatus and a voice control method thereof in which an identifier is assigned based on a preset standard and a user uses a voice recognition technology, thereby controlling a voice.

According to an aspect of an exemplary embodiment, there is provided a display apparatus. The display apparatus may include: a display unit which displays a plurality of icons, a control unit which controls the display unit to display identifiers for the plurality of icons, the identifiers assigned to the plurality of icons based on a preset standard and different from each other if a voice recognition mode starts, and a voice input unit which receives a voice input. For example, if a voice input for an arbitrary identifier is received through the voice input unit, the control unit selects an icon corresponding to the received voice input for the identifier.

For example, if a voice input for a preset keyword is received through the voice input unit, the control unit may start the voice recognition mode and assign identifiers different from each other to the plurality of icons.

The display apparatus may further include a motion recognition unit which recognizes a motion. For example, if a preset motion is recognized by the motion recognition unit, the control unit may start the voice recognition mode to assign the identifiers different from each other to the plurality of icons.

The display apparatus may further include an input unit which inputs a user select signal. For example, if the user select signal for starting the voice recognition mode is input through the input unit, the control unit may start the voice recognition mode to assign the identifiers different from each other to the plurality of icons.

The identifiers may be numbers or characters different from each other assigned according to relative positions of the plurality of icons on a screen of the display unit.

The identifiers may be sequentially increased numbers or characters assigned according to an arrangement position, direction, or distance of each icon from a preset position on the screen of the display unit.

If a page change is performed in the voice recognition mode state, the display unit may display icons corresponding to a new page changed and the control unit may assign identifiers for the icons corresponding to the new page according to a display position in the new page.

The control unit may assign sequentially increased numbers or characters in order of frequency from an icon of high frequency to an icon of low frequency among the plurality of icons as the identifiers.

According to an aspect of another exemplary embodiment, there is provided a method of controlling a voice of a display apparatus. The method may include: displaying a plurality of icons, displaying identifiers different from each other assigned to the plurality of icons according to a preset standard to each of the plurality of icons if a voice recognition mode starts, and searching and selecting an icon corresponding to a voice input for an arbitrary identifier if the voice input for the arbitrarily identifier is received.

The method may further include, while displaying the plurality of icons, determining whether or not a voice input for a preset keyword is received and starting the voice recognition mode if the voice input for the preset keyword is received.

Alternatively, the method may further include, while displaying the plurality of icons, determining whether or not a preset motion is recognized and starting the voice recognition mode to assign the identifiers different from each other to the plurality of icons if the preset motion is recognized.

Alternatively, the method may further include determining whether or not a user select signal for starting the voice recognition mode is input and, if the user select signal is input, starting the voice recognition mode to assign the identifiers different from each other to the plurality of icons.

The identifiers may be numbers or characters different from each other assigned according to relative positions of the plurality of icons on a screen.

The identifiers may be sequentially increased numbers or characters assigned according to an arrangement position, direction, or distance of each icon from a preset position on the screen.

The method may further include displaying icons corresponding to a new page if a page change is performed in the voice recognition mode state and assigning and displaying identifiers for the icons corresponding to the new page according to display positions of the new page.

The identifiers may be sequentially increased numbers or characters assigned in order of frequency from an icon of high frequency to an icon of low frequency among the plurality of icons.

According to an aspect of another exemplary embodiment, there is provided a display apparatus. The display apparatus may include: a display unit which displays an icon on a screen, a control unit which adds a new icon corresponding to new data on the screen if the new data is downloaded from an external server, and a voice input unit which receives a voice input.

For example, if a voice recognition mode starts, the control unit may control the display unit to assign and display identifiers different from each other for the new icon and the icon based on display positions. Additionally, if a voice input for an arbitrary identifier is received through the voice input unit, the control unit may select an icon corresponding to the received voice input for the identifier.

According to the exemplary embodiments as described above, identifiers are assigned to each icon displayed on a screen according to a preset standard and if a user pronounces a corresponding identifier, an icon corresponding to the identifier is selected so that the function for the selected icon is performed. Thus, the user can effectively and easily use a voice recognition technology.

Additional aspects and advantages of the exemplary embodiments will be set forth in the detailed description, will be obvious from the detailed description, or may be learned by practicing the exemplary embodiments.

### BRIEF DESCRIPTION OF THE DRAWINGS

The above and/or other aspects will be more apparent by describing in detail exemplary embodiments, with reference to the accompanying drawings, in which:

FIG. 1 is a block diagram illustrating a configuration of a display apparatus according to an exemplary embodiment;

FIG. 2 is a block diagram illustrating a configuration of a display apparatus according to exemplary embodiments;

FIGS. 3 to 8 are views illustrating a screen display change when a voice recognition mode is entered; and

FIG. 9 is a flow chart illustrating a method of voice control of a display apparatus according to an exemplary embodiment.

### DETAILED DESCRIPTION OF THE EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

(Configuration of Display Apparatus)

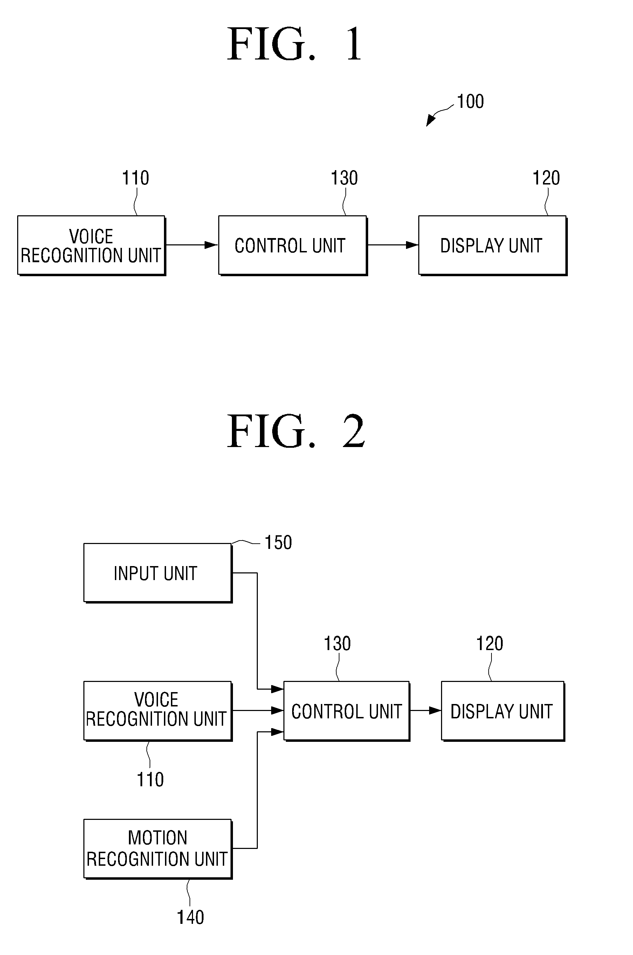

FIG. 1 is a block diagram illustrating a configuration of a display apparatus according to an exemplary embodiment. The display apparatus 100 may be implanted by various kinds of products such as a television (TV), a mobile phone, a personal digital assistant (PDA), an electronic frame, a tablet personal computer (PC), a PC, a portable PC. Particularly, the display apparatus 100 may be disposed in and used by a smart TV or a smart phone in which applications or widgets programs are easily installed.

Referring to FIG. 1, the display apparatus 100 includes a voice input unit 110, a display unit 120 and a control unit 130.

The voice input unit 110 receives a voice input of a user, analyzes the received voice input and provides an analyzed result to the control unit 130.

The voice input unit 110 may analyze the voice input using various voice recognition technologies and an internal configuration of the voice input unit 110 may be diversely modified based on a kind of the used technology.

For example, when a word recognition technology is used, the voice input unit 110 may include a microphone unit which collects the voice input, an analyzing unit which analyzes the collected voice input, a phoneme recognition unit which recognizes phoneme using an analyzing result of the analyzing unit, a word recognition unit which recognizes a word using the recognized phoneme and a processing unit which provides the recognized word to the control unit, which are not shown in the drawings.

The analyzing unit may perform a mathematical transformation process for the received voice input such as frequency analysis or linear prediction analysis every short interval of about 20 to 30 ms and output a feature vector-based signal using a mathematical transformation processing result.

The phoneme recognition unit may perform segmentation using a characteristic of the output signal to recognize vowels and consonants using each interval of the voice input as one unit. A recognition result may be provided to the word recognition unit in a phoneme lattice form.

The word recognition unit may convert phoneme lattice into word lattice by referring to a word dictionary in which sound patterns of words are recorded. The word dictionary may be stored inside the voice input unit 110 or a memory in the display apparatus 100 itself.

The processing unit may form a word sequence which is semantically matched using a word included in the word lattice.

The configuration and operation of the voice input unit 110 as described above are exemplary and may be diversely modified when other voice recognition technologies are used. The voice recognition technologies have been disclosed and thus specific descriptions and illustrations thereof will be omitted.

The display unit 120 may display a plurality of icons. Here, the icons may be icons for various kinds of applications or widgets programs installed in the display apparatus 100, icons for various kinds of contents (for example, photos, pictures, texts, or the like), files, folders, or the like provided in the display apparatus 100, or menu icons for various kinds of functions included in the display apparatus 100. In addition, the icons may include thumb nail images for photos, or the like.

A user may change a display position or shape of the icon. That is, a user may align and display various kinds of icons based on various alignment standards such as a generation order, position or function of the icon. Alternatively, a user may arbitrarily set positions of the icons and operate to display the icons in the set positions. In addition, an icon determined by a default may be used as the icon shape, or the icon may be changed and displayed in an icon shape separately selected by a user.

The control unit 130 may control the display unit 120 to generate icons for various kinds of program or content preinstalled as graphical user interface (GUI) images and display the generated GUI images when the display apparatus 100 is turned on or enters from a power saving mode into a standby mode.

On the other hand, a user may download a paid or free application program or other contents from an external server such as an application store. When an icon corresponding to new data exists, the control unit 130 may control the display unit 120 to generate and display a new icon.

In a normal state, the display unit 120 may simply display icons for each program or data as default icons or icons designated by a user.

At this time, when a voice recognition mode is started or initiated by a user, the control unit 130 may control the display unit 120 to display identifiers for each icon for selecting the corresponding icon through a voice.

Numbers, characters, symbols or the like may be used as the identifiers. In this case, the control unit 130 may assign an identifier to each icon on the screen based on a preset standard. Various standards such as a display position, use frequency or generation order of the icon may be used as the preset standard.

The case where the identifiers are assigned based on the display positions will be described below. First, the control unit 130 checks the position value for each icon on the screen. A grid coordinate on a GUI structure may be used to determine the position value. The icons may have relative position values according to grid positions.

When the voice recognition mode starts, the control unit 130 displays numbers or characters sequentially increased according to the relative position values for each icon. When numbers are used as the identifiers, the identifiers may be assigned in order of "0, 1, 2, 3, ..., n". When characters are used as the identifiers, the identifiers may be assigned in order of "a, b, c, ..., z" or "¬, L, ⊏, ..., 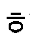 ".

When the identifiers are assigned according to the display positions of the icons as described above, an appropriate identifier may be assigned according to a display position of a new icon even when a new icon is generated and displayed on an arbitrary position of the screen later. Thereby, even for icons incoherently displayed on the screen, a selection operation can be easily performed using a voice recognition technology.

FIG. 2 is a block diagram illustrating a detailed configuration of a display apparatus 100 according to exemplary embodiments.

Referring to FIG. 2, the display apparatus 100 may further include a motion recognition unit 140, and an input unit 150.

The motion recognition unit 140 recognizes motion of a user located in front of the display apparatus 100 and outputs a recognition result to the control unit 130. The motion recognition unit 140 may include a CMOS image sensor device, a three-dimensional depth camera or the like. When a motion which is identified with preset motion information above a critical level, the control unit 130 may perform a control corresponding to the recognized motion.

The input unit 150 inputs a user select signal which is input by manipulating a key provided in a main body of the display apparatus 100 or a remote controller.

As described above, the operating mode of the display apparatus 100 may be converted from a normal mode into a voice recognition mode by a user and operate in the voice recognition mode while the display apparatus 100 operates in the normal mode. A conversion method to the voice recognition mode may be diversely implemented as explained below with respect to exemplary embodiments.

For example, when the motion recognition unit 140 is included in the display apparatus 100 as described above, a user makes a preset motion to enter into the motion recognition mode. Alternatively, when a user makes an arbitrary motion, the motion recognition unit 140 recognizes the arbitrary motion and outputs a recognized result to the control unit 130. The control unit 130 determines whether or not the arbitrary motion is a motion for entering into the voice recognition mode. Based on the determination result, the control unit 130 initiates the voice recognition mode to assign and display an identifier for each icon being displayed. As an example of the motion, there are a motion waving a hand, a motion pushing forward a hand, a motion moving the hand to the left or right, a motion raising a hand, a motion drawing a specific pattern such as a circle, and the like.

Another example, a separate key may be used to enter the motion recognition mode. That is, when a user selects a key provided in a main body of the display apparatus 100 or a remote controller, a user select signal is input through the input unit 150 and thereby, the control unit 130 can directly enter a voice recognition mode.

Another example, a specific keyword is input through the voice input unit 110 so that the control unit 130 can enter the voice recognition mode. That is, a user may pronounce a keyword set by a default or a keyword arbitrarily set by the user. The voice input unit 110 is activated even in operating in a normal mode to check whether or not the user pronounces the corresponding keyword. When it is checked that the pronounced keyword is input, the control unit 130 directly initiates the voice recognition mode, assigns an identifier, and controls the display unit 120 to display an icon screen including the assigned identifier.

The display unit 120 outputs a screen according to a control of the control unit 130. Although it is illustrated that the control unit 130 generates a GUI icon image as described above, the display apparatus 100 may be configured such that a GUI generation unit or various kinds of signal processing units are included in the display unit 120 if necessary.

In an exemplary embodiment, the input unit 150 and the motion recognition unit 140 may be separately included in the display apparatus 100 or may be integrally included in the display apparatus 100. In addition, not shown in FIG. 2, when the display apparatus 100 is implemented as a TV or the like, various elements such as a tuner unit, a demodulation unit, a decoder unit and a scaler may be further included in the display apparatus 100.

(Screen Display in Voice Recognition Mode)

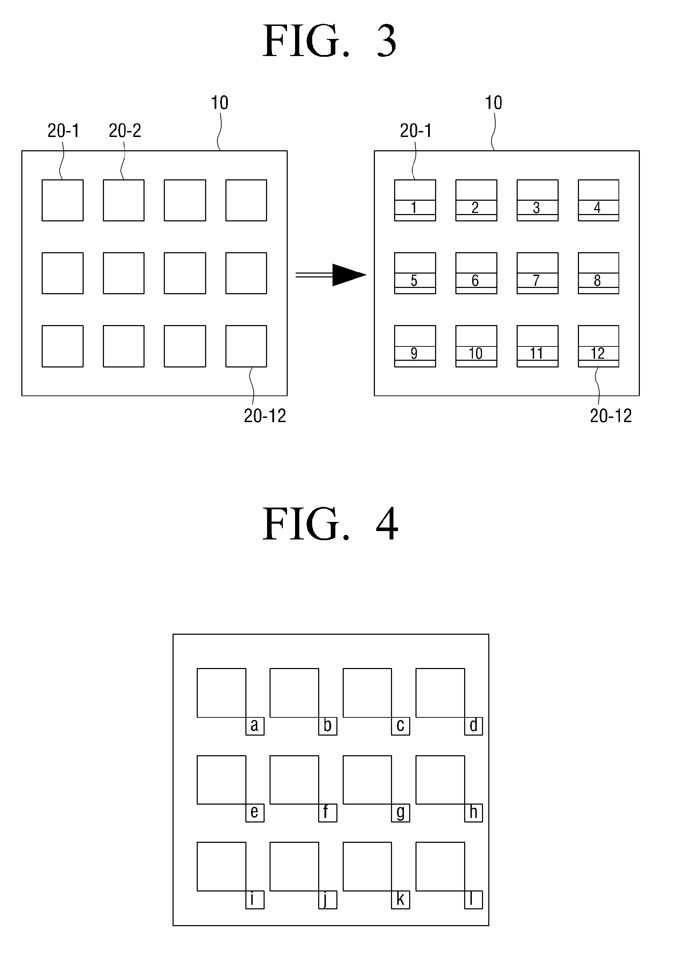

FIG. 3 is a view illustrating an example of a screen change state when a normal mode is converted into a voice recognition mode.

Referring to FIG. 3, a plurality of icons 20-1, 20-2, ..., 20-12 may be displayed on a screen 10 of the display apparatus 100. As described above, the icons may include an execution icon corresponding to a program, a shortcut icon, a file or folder icon and various kinds of icons such as a content image or the like.

In such a state, when the normal mode is converted into the voice recognition mode by a user, identifiers are assigned to the icons and the icons to which the identifiers are assigned are displayed on the screen 10 as shown in a right side of FIG. 3. Numbers are used as the identifiers in FIG. 3 and the numbers are increased by "1" toward a right and downward side directions on the basis of a left upper edge of the screen 10 so that numbers 1 to 12 are assigned to the icons as the identifiers.

On the other hand, characters such as alphabets or consonants of Hangeul, symbols or the like may be used as the identifiers other than the numbers. The displaying positions of the identifiers may not overlap the icons and the identifier may be displayed at one side of an icon.

FIG. 4 illustrates the case where alphabets a, b, c, ..., k, 1 are displayed at one side of each icon as the identifiers.

The icons may be aligned and displayed in a matrix form as shown in FIGS. 3 and 4, but may be aligned in a vertical line form, a horizontal line form or a random pattern form.

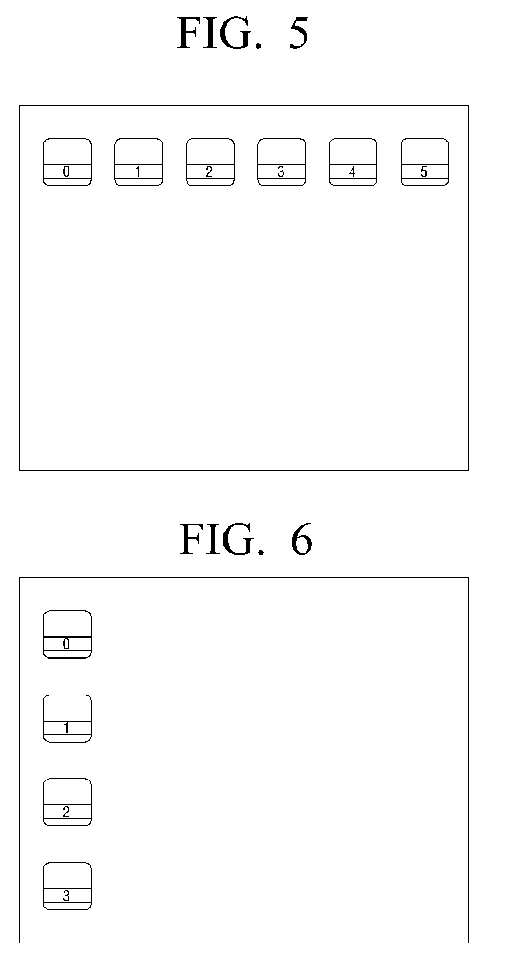

FIGS. 5 to 7 are views illustrating icons aligned in various forms and a method of assigning identifiers to the aligned icons.

Referring to FIG. 5, the icons are aligned in a horizontal line form. In this case, when numbers are used as identifiers, numbers 0, 1, 2, 3, 4 and 5 which are sequentially increased from a left side to a right side may be assigned to the icons as the identifiers.

Referring to FIG. 6, the icons are aligned in a vertical line form. When numbers are also used as identifiers in FIG. 6, numbers 0, 1, 2 and 3 which are sequentially increased from an upper side to a lower side may be assigned to the icons as the identifiers.

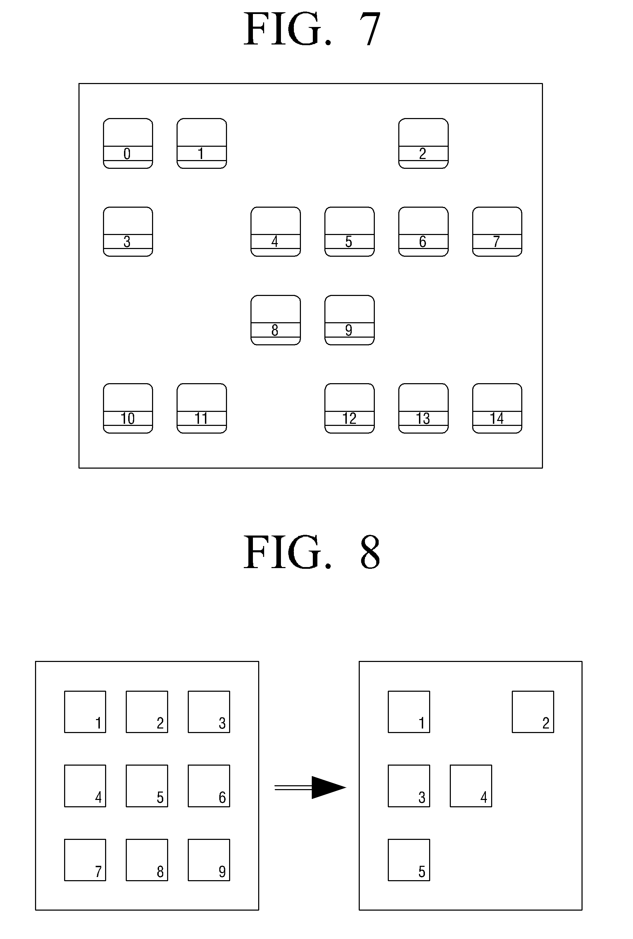

FIG. 7 illustrates the case where the icons are aligned in a random pattern form. When numbers are also used as identifiers in FIG. 7, numbers may be sequentially assigned to the most adjacent icons from the uppermost left edge to a right side, and if no more icons exist to the right side, the numbers may be sequentially assigned icons from a left side to a right side in the next lower line.

Although various shapes of icons are displayed in various positions, identifiers are assigned according to a specific standard and thereby an appropriate identifier may be assigned to a new icon even when a new program is downloaded from an application store or the like and the new icon is generated.

FIG. 8 illustrates the case of converting a screen into a next page screen while a plurality of icons are aligned and identifiers are assigned to the icons. Referring to FIG. 8, while nine icons are aligned and identifiers 1 to 9 are assigned to the nine icons, a current screen page is converted into a next screen page when a user inputs a user select signal for converting the current screen page into the next screen page. At least one icon corresponding to a previous screen page is displayed on the next screen page as shown in FIG. 8 and identifiers are assigned to newly displayed icons again. In this case, numbers 1 to 9 which were the identifiers of the previous screen page may be used. That is, as shown in FIG. 8, numbers 1, 2, 3, 4 and 5 may be assigned to the icons from a left upper edge toward a right and lower side directions and thus the user pronounces an identifier displayed on a currently displayed screen page and selects his desired icon.

The control unit 130 performs functions corresponding to the selected icon. That is, when the icon is an execution icon for a program, the control unit 130 performs the corresponding program. When the icon is an icon for various kinds of contents, the control unit 130 may reproduce the corresponding content. When the icon is a thumb nail image for a photo, the control unit 130 may output an original image for the thumb nail image on a screen. When a file or folder icon is selected, the control unit 130 may open the file or folder and output the stored content in the file or folder.

In the above exemplary embodiments, a case where only a plurality of icons are displayed and identifiers are assigned to the plurality of icons is illustrated. However, only one icon may be displayed and an identifier may be assigned to an icon.

In addition, the identifiers need not to include numbers which are sequentially increased from a left upper edge toward a right and lower side directions and the identifiers may include numerals assigned in different positions and different directions.

In the above exemplary embodiments, the case where the identifier is assigned to the icon based on a position of the icon is illustrated, but the identifier may be assigned based on its frequency of use or based on the generation order of the icon. For example, a small number identifier may be assigned to an icon of high frequency and a large number identifier may be assigned to an icon of low frequency. Alternatively, a small number identifier may be assigned to an earlier generated icon and a large number identifier may be assigned to a later generated icon. An order in number arrangement may be inversely implemented.

When identifiers are assigned based on use frequency or generation order, it appears as if the order of the identifier is irregular. In this case, total icons or icons of the corresponding page may be appropriately realigned to an order of the identifier.

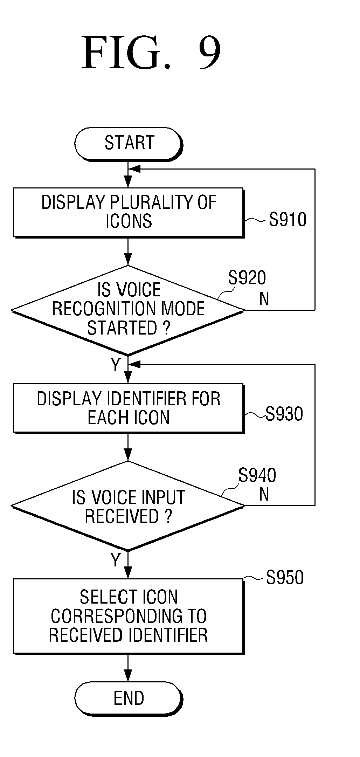

FIG. 9 is a flow chart illustrating a method of voice control of a display apparatus according to an exemplary embodiment.

Referring to FIG. 9, a plurality of icons are displayed (S910). While the plurality of icons are displaying, if a voice recognition mode starts (S920), an identifier for each icon being displaying is displayed (S930).

The voice recognition mode may start when a user pronounces a keyword, when a user makes a specific motion, or when a user inputs a select signal for entering the voice recognition mode as described above.

The identifier is determined according to a voice input and may be referred to as a voice command, a voice recognition command, or the like. Numbers may be used as the identifier. Characters such as alphabets or consonants of Hangeul may be used as the identifier. In addition, symbols may be used as the identifier. When the number is used as the identifier, sequentially increased numbers may be assigned to the icons. When the character is used as the identifier, the characters may be assigned in order. For example, when English character is used, alphabets from "a" to "z" may be sequentially used as the identifier in that order.

A displaying scheme or sequence of the identifier, or the like may be diversely changed according to exemplary embodiments as described above and as shown in FIGS. 3 to 8.

While the icons along with the identifiers are displayed, a user pronounces an identifier to select an icon he/she wants. When a voice input for an arbitrary identifier is received (S940), the display apparatus 100 determines whether the received voice input for the arbitrary identifier is the same as an identifier displayed on the current screen. In this case, the display apparatus 100 may analyze the pronunciation of the voice input to recognize a phoneme, recognize a word including the phoneme, and determine whether or not an identifier similar to the recognized word above a critical level exists.

If it is determined that the identifier does not exist, the display apparatus 100 may not perform a separate operation and stand-by for another voice input of a user.

If it is determined that the identifier exists, the display apparatus 100 selects an icon corresponding to the identifier and performs a function matched to the icon (S950). The performing the function for the icon has been described above in detail and thus the repeated description thereof will be omitted.

Although not shown in FIG. 9, when a page is changed with the voice recognition mode being started, the display apparatus 100 may further include a process of displaying icons for a new page, assigning new identifiers to the icons for the new page and displaying the icons along with the identifiers for the new page.

As described above, the identifiers are automatically assigned to the icons and the icons along with the identifiers are displayed so that a user can perform a voice input by simply pronouncing the identifier displayed in the screen. Thereby, the user does not need to learn various voice recognition commands for various kinds of menus through a manual. In addition, since a complicated voice recognition command is not used, an execution speed or reliability of voice recognition can be improved.

Particularly, as described above, the current display apparatus can download various contents or programs from an external server, a memory or the like, and thereby generation of a new icon and/or deletion or correction of an existing icon frequently occurs. In this case, in the related art, a set of voice recognition commands has to be newly added or a set of previous commands has to be updated to correctly perform a voice input. However, in the exemplary embodiments, the identifiers are assigned without affecting the voice recognition commands of the icons thereby improving the voice recognition technology.

In the exemplary embodiments, it is illustrated that while normal icons are displayed, the identifiers are displayed from the time when the normal mode is converted into the voice recognition mode, but it is not limited thereto. That is, the voice control method may be implemented by initially displaying the identifiers along with the icons, directly pronouncing the corresponding identifier by a user and performing a voice control.

A program code for performing the above voice control method may be stored in various kinds of recording media. Specifically, the program code may be stored in various kinds of recording readable media in a terminal such as in a random access memory (RAM), a flash memory, a read only memory (ROM), an erasable programmable ROM (EPROM), an electronically erasable and programmable ROM (EEPROM), a register, a hard disc, a removable disc, a memory card, a universal serial bus (USB), a compact disc (CD)-ROM, or the like.

Thereby, when a recording medium in which the above program code is recorded is connected to or mounted on a kind of apparatus in which a voice input unit is included, the above described voice control method can be supported.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus comprising:
a display unit which displays a plurality of icons on a screen;
a control unit which controls the display unit to display identifiers corresponding to the plurality of icons, the identifiers different from each other are assigned to the plurality of icons based on an icon display location on the screen if a voice recognition mode is initiated; and
a voice input unit which receives a voice input,
wherein the control unit, selects an icon corresponding to the received voice input, if the voice input for the corresponding identifier is received through the voice input unit.

2. The display apparatus as claimed in claim 1, wherein the control unit, initiates the voice recognition mode to assign the identifiers different from each other to the plurality of icons, if the voice input for a preset keyword is received through the voice input unit.

3. The display apparatus as claimed in claim 1, further comprising a motion recognition unit which recognizes a motion,
wherein the control unit, initiates the voice recognition mode to assign the identifiers different from each other to the plurality of icons, if a preset motion is recognized by the motion recognition unit.

4. The display apparatus as claimed in claim 1, further comprising an input unit which inputs a user select signal,
wherein the control unit initiates the voice recognition mode to assign the identifiers different from each other to the plurality of icons, if the user select signal for initiating the voice recognition mode is input through the input unit.

5. The display apparatus as claimed in claim 1, wherein the identifiers are numbers or characters different from each other assigned according to relative positions of the plurality of icons on the screen of the display unit.

6. The display apparatus as claimed in claim 5, wherein the identifiers are sequentially increasing numbers or characters assigned according to an arrangement position, direction, or distance of each icon from a preset position on the screen of the display unit.

7. The display apparatus as claimed in claim 5, wherein, if a page change is requested in the voice recognition mode,
the display unit displays icons corresponding to a new page and
the control unit assigns identifiers to the icons corresponding to the new page according to a display position of the icons in the new page.

8. A method of voice control of a display apparatus, the method comprising:
displaying a plurality of icons on a screen;
if a voice recognition mode is initiated, displaying identifiers which are different from each other and assigning the plurality of icons according to an icon display location on the screen to each of the plurality of icons; and
if a voice input for an arbitrary identifier is received, searching and selecting an icon corresponding to the received voice input.

9. The method as claimed in claim 8, further comprising: while displaying the plurality of icons,
determining whether or not the voice input for a preset keyword is received; and initiating the voice recognition mode if the voice input for the preset keyword is received.

10. The method as claimed in claim 8, further comprising: while displaying the plurality of icons,
determining whether or not a preset motion is recognized; and
initiating the voice recognition mode to assign the identifiers different from each other to the plurality of icons if the preset motion is recognized.

11. The method as claimed in claim 8, further comprising:
determining whether or not a user select signal which initiates the voice recognition mode is input; and
if the user select signal is input, initiating the voice recognition mode to assign the identifiers different from each other to the plurality of icons.

12. The method as claimed in claim 8, wherein the identifiers are numbers or characters different from each other assigned according to relative positions of the plurality of icons on a screen.

13. The method as claimed in claim 12, wherein the identifiers are sequentially increasing numbers or characters assigned according to an arrangement position, direction, or distance of each icon from a preset position on the screen.

14. The method as claimed in claim 12, further comprising:
displaying icons corresponding to a new page if a page change is requested according to the voice recognition mode; and
assigning and displaying the identifiers for the icons corresponding to the new page according to display positions of the icons on the new page.

15. A display apparatus, comprising:
a display unit which displays an icon on a screen;
a control unit which adds a new icon corresponding to new data on the screen if the new data is downloaded from an external server; and
a voice input unit which receives a voice input,
wherein the control unit controls the display unit to assign and displays identifiers different from each other to the icon and to the new icon based on display positions of the icons on the screen when a voice recognition mode is initiated, and
the control unit, selects an icon corresponding to the received voice input, if a voice input for the arbitrary identifier is received through the voice input unit.
